# EUROPEAN PATENT SPECIFICATION

(11) **EP 0 550 582 B1**
(45) Date of publication and mention of the grant of the patent: **15.01.1997**
(21) Application number: 91917263.5
(22) Date of filing: 25.09.1991
(51) Int. Cl.: B60T 8/50, B60T 8/42

(54) **HYDRAULIC ANTI-LOCK BRAKING SYSTEMS FOR VEHICLES**
HYDRAULISCHE ANTIBLOCKIERBREMSSYSTEME FÜR FAHRZEUGE
SYTEMES DE FREINAGE HYDRAULIQUE ANTIBLOQUANT DE VEHICULES

(30) Priority: 28.09.1990 GB 9021231; 13.03.1991 GB 9105324
(43) Date of publication of application: 14.07.1993
(73) Proprietor: LUCAS INDUSTRIES public limited company, Solihull, West Midlands B90 4LA (GB)
(72) Inventor: FARR, Glyn, Phillip, Reginald 21 The Hamlet, Warwickshire CV35 7QW (GB); SHERIFF, Philip, William 7 Knottesford Close, Warwickshire B97 4NF (GB)
(74) Representative: Spall, Christopher John
(86) International application number: GB9101657
(87) International publication number: WO9205992

(56) References cited:
- EP-A- 0 202 845
- EP-A- 0 344 544
- EP-A- 0 361 336
- EP-A- 0 401 856
- WO-A-80/01783
- DE-A- 2 643 860
- US-A- 3 856 047
- PATENT ABSTRACTS OF JAPAN vol. 14, no. 97 (M-940)(4040) 22 February 1990 & JP, A,01 306 356 ( SUMITOMO ELECTRIC IND. ) 11 December 1989 see abstract

## Description

This invention relates to hydraulic anti-lock braking systems for vehicles of the kind in which the pressure applied to a braked wheel is controlled in response to signals from an electronic control unit, in turn responsive to signals from a speed sensor associated with the wheel.

A system of the kind set forth is disclosed in EP-A-0 202 845. In the system of EP-A-0 202 845 a flow control valve operates with a single-acting normally closed solenoid-operated valve to provide effective control of the pressure in the braked wheel in response to signals from the electronic control unit.

The flow valve of EP-A-0 202 845 embodies a number of features namely:-
a) In a first quiescent position, it permits a free flow of fluid between an inlet connected to the input from an hydraulic master cylinder and and outlet connected to the output to the brake;
b) In a first transient position the master cylinder is isolated from the brake;
c) In a second transient position the brake is connected to an expansion chamber by way of the solenoid-operated valve which is open; and
d) In a second quiescent position, the flow valve meters fluid from the inlet to the outlet at a rate determined by a constant pressure drop across an orifice in a spool, which pressure drop is dependant upon the force of a control spring and the area of the spool.

The constant pressure drop also ensures a constant flow rate irrespective of any excess level of input pressure and because the rate at which the volume of the brake increases as the pressure rises, the flow valve provides a variable re-apply rate with brake pressure level. At low brake pressures, the re-application rate is relatively slow which compensates for the reduced wheel acceleration rate on slippery surfaces. At higher brake pressures, for high friction road conditions, the ability for the wheel to accelerate is increased and re-application of brake pressure following a skid correction can also be increased.

EP-A-0 344 544 discloses a flow valve having similar features to those of EP-A-0 202 845. In EP-A-0 344 544 however the flow is directed through the centre of the spool. This has the advantage of a longer leakage path between the input and the output whilst the spool is in its control mode, but with the inherent disadvantage of increasing from two to three the number of parasitic leakage paths between a chamber accommodating the control spring and the input/output connections at least when the solenoid-operated valve is actuated. In EP-A-0 344 544 a fixed orifice is located at an intermediate point in the length of the centre of the spool.

We are also aware of EP-A-0 361 336, which discloses a control valve for an anti-lock brake control device. In this valve a spool slidably mounted in a housing is formed with a channel including an orifice. When the spool is in a first position, a large flow passage is formed between the inlet and outlet ports. In another position, a restricted flow passage is formed between the inlet and outlet ports through the orifice while the large flow passage is closed. In an anti-lock mode fluid is dumped from the brake to an expander chamber through an external solenoid-operated control valve.

According to a first aspect of the invention, in an hydraulic anti-lock braking system for a vehicle in which the pressure applied to a braked wheel is controlled in the response to signals from an electrical control unit, in turn responsive to signals from a speed sensor associated with the wheel, and in which a flow valve operates with a single solenoid-operated valve, the flow valve incorporates a spool provided with a number of external annular grooves working in a bore in a housing with the flow to the brake directed through a passage passing substantially through the centre of the spool, a fixed orifice located at or adjacent one end of the spool of which a portion of the bore at that end of the spool defines a chamber for a control spring, and a variable orifice is defined between a port in the housing and a metering edge on the input side of an annular groove in the spool and which communicates with the passage in the spool, is. characterised in that fluid is dumped from the brake via an annular groove in the spool which does not communicate with the passage in the spool.

The annular groove in the spool nearest the fixed orifice may suitably be the annular groove that does not communicate with the passage in the spool via a passage in the spool extending from the groove to the passage.

In the skid control or ABS mode the tolerances affecting the clearances between the spool and the bore are relatively non-critical since the flow valve has only one parasitic leak path whilst the spool is in transient mode and with only one extra leakage path whilst the spool is in metering mode.

Our invention retains all the benefits of the flow valves of EP-A-0 202 845 and EP-A-0 344 544 but has a reduced parasitic leakage between the spring chamber and the input/output. This enables larger tolerances to be used between the spool and the bore.

Locating the fixed orifice at or adjacent one end of the spool with the absence of flow passages beyond the orifice facilitates tolerance free machining, suitably gauge machined using the end face as a datum.

Our invention therefore not only utilises the reduced leakage between input and output, but also reduces the parasitic leakage between the spring chamber and the input/output to one when the solenoid-operated valve is opened.

The flow valve may be provided with an attenuation chamber and orifice to reduce the driver's pedal reaction. This attenuates the difference between the pump output and the flow being metered to the brake.

Some embodiments in accordance with our invention are illustrated in the accompanying drawings in which:-
Figure 1 is a layout of an hydraulic anti-lock braking system for a vehicle;
Figure 2 is a layout similar to Figure 1 but showing a modified construction;
Figure 3 is a layout of another anti-lock braking system for a vehicle; and
Figure 4 is a layout of still another anti-lock braking system for a vehicle.

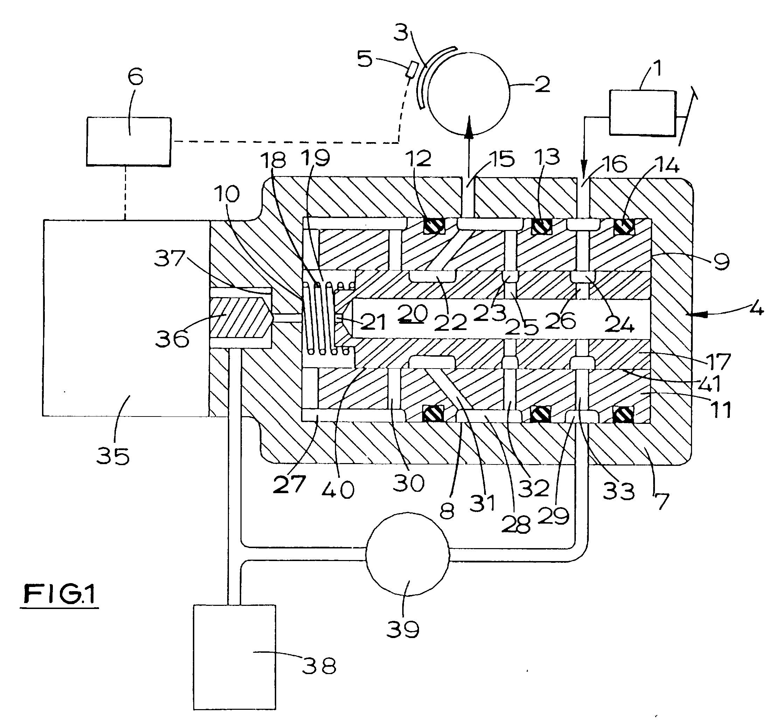

The braking system illustrated in Figure 1 of the accompanying drawings comprises a pedal-operated hydraulic master cylinder 1 for applying a brake 2 on a wheel 3 of a vehicle through a modulator assembly 4. The behaviour of the wheel is sensed by a wheel speed sensor 5 which sends signals to an electronic control unit 6, and the signals are differentiated by the unit which, in turn, emits an energising current to control operation of the modulator assembly 4.

The modulator assembly 4 comprises a housing 7 having a longitudinal bore 8 extending between axially spaced faces 9, 10 at opposite ends of the housing 7. A sleeve 11 received in the bore 8 is provided with three annular seals 12, 13, 14 of which the seals 12 and 13 are disposed on opposite sides of an outlet passage 15 leading to the brake 2, and the seals 13 and 14 are disposed on opposite sides of an inlet passage 16 from the master cylinder 1.

A spool 17 works in the bore of the sleeve 11 and is biassed against the face 9 by a spring 18 housed in a chamber 19 between the opposite end of the spool 17 and the face 10. The spool 17 has a central passage in the form of a drilling 20 with a fixed restrictor 21 at or adjacent to the end adjacent to the spring chamber 19. The spool 17 is also provided with three, external, annular grooves 22, 23, 24 of which the two grooves 23, 24 furthest from the spring chamber 19 have radial passages 25, 26 communicating with the drilling 20.

The sleeve 11 has three grooves 27, 28, 29 and four cross passages 30, 31, 32, 33 adapted to connect with the grooves 22, 23, 24 in either a quiescent or transient state.

A single acting solenoid operated dump valve 35 has a valve member 36 which normally engages with a seating 37 in the housing 7 to isolate the spring chamber 19 from an expander chamber 38, and a pump 39 is adapted to withdraw fluid from the expander chamber 38 and return it to the cross passage 33.

In a normal inoperative position for normal brake operation fluid from the master cylinder 1 passes freely through the cross passages 33, the radial passages 26, the central drilling 20, the radial passages 32 and the outlet passage 15 to the brake 2.

Upon receipt of a skid signal from the electronic control unit 6, the solenoid-operated valve 35 opens to connect the spring chamber 19 to the expander chamber 38. At this point fluid flows from the inlet 16 to the spring chamber 19 through the restrictor 21 and leaks through a single leak path defined by a land 40 between the end of the spool 17 and the groove 22.

When the pressure differential across the area of the spool 17 subjects the spool 17 to a force sufficient to overcome the force of the spring 18, the spool 17 moves to:-
a) Isolate the inlet 16 from the outlet 15;
b) Connect the outlet 15 to the spring chamber 19; and
c) Attain its metering position defined by a variable orifice constituted by the co-operation of the groove 24 with the passages 33 with the edge on the input side.

The reduction in pressure permits a recovery of the wheel 3, the skid signal is cancelled, and the solenoid-operated valve 35 is closed. The spool 17, however, remains in its metering position with the outlet 15 and the spring chamber 19 interconnected whilst the output pressure is less than the input pressure. In its metering mode the spool 17 has a leakage past the land 41 at the end of the spool 17 remote from the spool chamber 19. This leakage will be smaller than the metered flow and is directed to the brake 2 through the restricted orifice. Since the leakage is not between the inlet 16 and the outlet 15, there is no parasitic leakage.

When the solenoid-operated valve 35 is first opened, the initial pressure drop of fluid in the spring chamber 19 provides the differential necessary to cause the spool 17 to move against the spring 18. Ideally, no leakage between the inlet 16 and the spring chamber 19 should occur but, of necessity, flow occurs across the fixed orifice 21. Any other leakage is parasitic but such leakage occurs only at the land 40 immediately adjacent the spring chamber 19. The tolerances controlling clearances in the diameters of the spool 17 and the sleeve 11 can, therefore, be relaxed which means that the components are therefore easier to manufacture.

In the construction described above the pump 39 is adapted to return fluid to the inlet 16 at the same time as the spool 17 is metering fluid into the brake 2. The difference between these two flows, although small, is felt at the brake 2 as a slight pulsation.

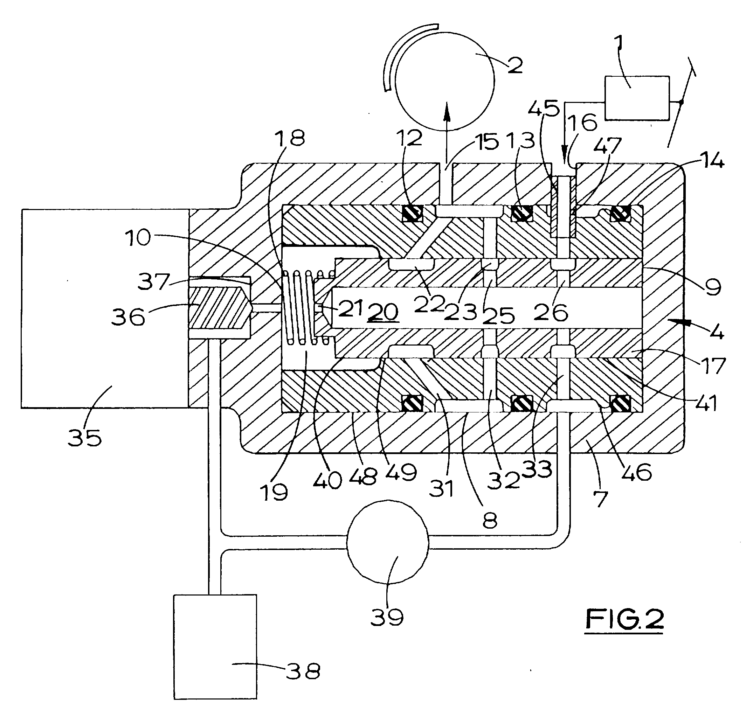

In a modified construction as illustrated in Figure 2 of the accompanying drawings, the input from the master cylinder 1 is fed via a steel tube 45 pressed into the housing 7 and the sleeve 11. An annular attenuation chamber 46 is defined between the housing 7 and the sleeve 11 and with which the return from the pump 39 communicates. An orifice 47 in the wall of the tube 45 leads into the annular chamber 46.

The passage 30 is omitted. The portion 48 of the sleeve 11 forward of the seal 12 is increased in diameter to fit the bore 8, and the internal bore of the sleeve 11 is enlarged to provide communication between the passage 31 and the chamber 19 when a land 49 forward of the passage 31 clears the land 40.

In the skid control or ABS mode the pump 39 returns fluid to the enlarged annular attenuation chamber 46 and fluid is metered to the brake 2 via the series of radial passages in the sleeve 11. Fluid is also metered through the single input defined by the steel tube 45 between the input and the brake 2. The excess flow between the output from the pump 39 and that metered to the brake 2 is attenuated by the fluid in the annular chamber 46 and the orifice 47 in the side-wall of the tube 45.

This improves pedal feel in comparison with the modulator of Figure 1.

The construction and operation of the assembly of Figure 2 is otherwise the same as Figure 1, and corresponding reference numerals have been applied to corresponding parts.

In the modulator assemblies described above the solenoid valve 35 is spring-loaded against the pressure which can be generated at the input. The solenoid valve 35 is positioned adjacent to the spring chamber 19 to reduce to a minimum the volume of the spring chamber 19. This is necessary to avoid premature movements of the spool 17 due to air trapped in the spring chamber 19.

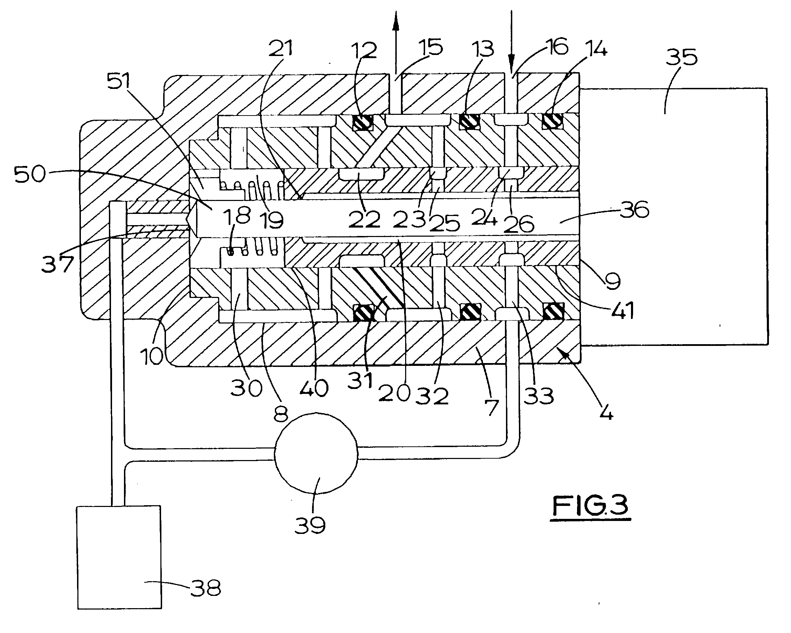

In the modulator assembly 4 illustrated in Figure 3 of the accompanying drawings the solenoid-operated valve 35 is mounted at the opposite end of the housing 7, and the valve member 36 is extended in length to project with clearance through the centre drilling 20 in the spool 17. A portion 50 terminating at the free end of the valve member 36 is guided in a guide 51 to maintain concentricity between the valve member 36 and the drilling 20.

The fixed orifice 21 is defined by an annular passage between the valve member 36 and an opening of reduced diameter at the inner end of the spool 17 adjacent to the chamber 19.

The solenoid valve 35 is pressure loaded onto the seating 37 and only a light spring is required. This is advantageous since the valve is easy to open at the low pressures encountered on low friction surfaces, and more difficult to open at the high pressures appropriate to braking on high friction surfaces. Consequently the solenoid valve 35 is quicker to act on low friction road surfaces where rapid wheel excursions from true speed are more likely. The valve member is located in the interior of the spool and does not contribute extra volume to the spring chamber 19.

The construction and operation of the modulator assembly of Figure 3 is otherwise the same as that of Figure 1, and corresponding reference numerals have been applied to corresponding parts.

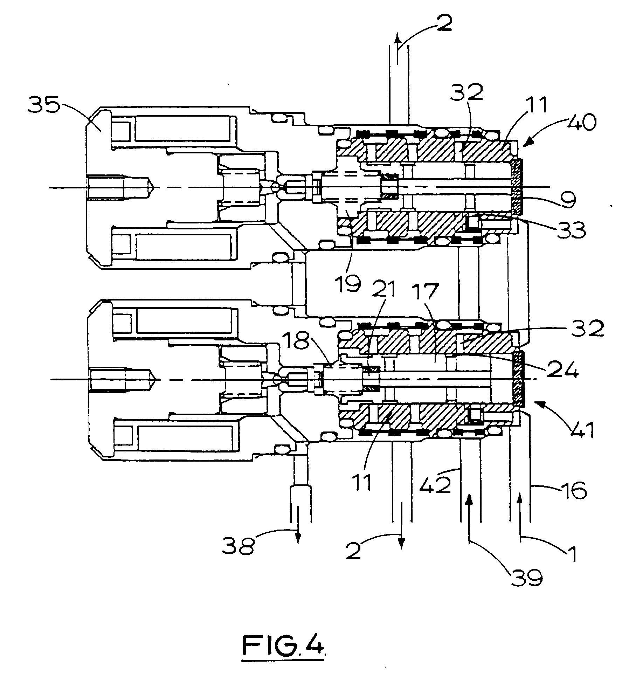

The braking system illustrated in Figure 4 of the accompanying drawings comprises two modulator assemblies 40, 41. Reference numerals corresponding to those used in Figure 1 have been applied to corresponding parts of the modulator assemblies 40 and 41. One modulator assembly controls the application of the right hand brake, the other controls the application of the left hand brake.

The spool 17 in the modulator assembly 40 is shown in the normal inoperative position, and the spool 17 in the modulator assembly 41 is shown in its metering position.

Passage 33 is displaced axially towards the wall 9 with respect to the passage 32, to isolate the expander chamber 38 from the master cylinder other than through the restrictors 21 in the spools 17 and the sleeves 11 of the modulator assemblies 40, 41.

When solenoid-operated valve 35 is first opened, the initial pressure drop of fluid in the spring chamber 19 provides the differential necessary to cause the spool 17 to move against the spring 18, and isolate the brake 2 from the master cylinder 1 by closing the inner end of passage 33.

Further movement of the spool in the same direction keeps the master cylinder isolated as the port at the inner end of the passage 33 is kept closed, and the spool reaches its metering edge of the groove 24 with the passage 32. At this point the brake pressure is held at a constant level and the pump 39 is adapted to return fluid to the inlet 16. As these two flows are substantially equal, the reaction at the brake pedal is minimal. Pump output can only pass to the master cylinder via the passages in both spool sleeves 11.

## Claims

1. An hydraulic anti-lock braking system for a vehicle in which the pressure applied to a braked wheel (3) is controlled in response to signals from an electrical control unit (6), in turn responsive to signals from a speed sensor (5) associated with the wheel, and in which a flow valve operates with a single solenoid-operated valve (35), the flow valve incorporating a spool (17) provided with a number of external annular grooves working in a bore in a housing with the flow to the brake directed through a passage (20) passing substantially through the centre of the spool, a fixed orifice located at or adjacent one end of the spool of which a portion of the bore at that end of the spool defines a chamber (19) for a control spring (18), and in which a variable orifice is defined between a port (33) in the housing and a metering edge on the input side of an annular groove (24) in the spool and which communicates with the passage (20) in the spool, characterised in that fluid is dumped from the brake via an annular groove (22) in the spool which does not communicate with the passage (20) in the spool (17).

2. An hydraulic anti-lock braking system for a vehicle according to claim 1, characterised in that it is the annular groove (22) in the spool nearest the fixed orifice which does not communicate with the passage (20) in the spool (17).

3. An anti-lock system according to any preceding claim, characterised in that there are no flow passages beyond the fixed orifice (21) at the end of the spool (17).

4. An anti-lock system according to any preceding claim, characterised that at least the two annular grooves (23, 24) furthest from the control spring chamber have radial passages (25, 26) communicating with the passage (20), and a sleeve received in the bore has grooves (27, 28, 29) and cross passages (30, 31, 32, 33) adapted to communicate with the external annular grooves (22, 23, 24) of the spool.

5. An anti-lock system according to claim 4, characterised in that of the two cross passages (33) furthest from the control spring chamber a first communicates with an input (16) from a master cylinder (1) and a second communicates with the expander chamber (38) via a pump (39) which is adapted to withdraw fluid from the expander chamber and return it via the second cross passage.

6. An anti-lock system according to any previous claim, characterised in that the flow valve is provided with an attenuation chamber (46) and an orifice to reduce a driver's pedal reaction.

7. An anti-lock system according to any of claims 1 to 5, characterised in that the fixed orifice is defined by an annular passage between a valve member (36) of the solenoid-operated valve (35) and an opening of reduced diameter at the end of the spool adjacent the control spring chamber (19).

8. An anti-lock system according to claim 5, characterised in that the first cross passage is axially displaced away from the control spring chamber (19) with respect to the second cross passage.

9. An anti-lock system according to claim 5, characterised in that the master cylinder input (16) is fed via a steel tube (45) pressed into the bore.

10. An anti-lock system according to claim 7, characterised in that the valve member (36) of the solenoid-operated valve (35) projects through the passage (20) into the spool (17).

11. An anti-lock system according to claim 10, characterised in that a guide (51) is present to maintain concentricity between the valve member (36) and the passage (20).

12. An anti-lock system according to claim 5, characterised in that the spool and sleeve (17, 11) in their rest positions are constructed and arranged to isolate the pump output from the master cylinder other than through the fixed orifice (21) located between the master cylinder and the pump.

## Patentansprüche

1. Hydraulisches Antiblockier-Bremssystem für ein Fahrzeug, bei dem der auf ein gebremstes Rad (3) aufgebrachte Druck als Reaktion auf Signale von einer elektrischen Steuereinheit (6) gesteuert wird, die ihrerseits auf Signale von einem zu dem Rad gehörigen Drehzahlsensor (5) anspricht, und bei dem ein Durchflußventil von einem einzigen Elektromagnetventil (35) gesteuert wird, wobei das Durchflußventil einen Steuerzylinder (17) enthält, der mit einer Anzahl äußerer, Ringnuten versehen ist, sich in einer Bohrung eines Gehäuses bewegt, die Strömung zur Bremse durch einen Kanal (20) geleitet wird, der im wesentlichen durch die Mitte des Steuerzylinders verläuft, an oder neben einem Ende des Steuerzylinders eine unveränderliche Öffnung (21) angeordnet ist, von dem ein Abschnitt der Bohrung an diesem Ende des Steuerzylinders eine Kammer (19) für eine Steuerfeder (18) begrenzt, und in dem eine veränderliche Öffnung zwischen einem Kanal (33) im Gehäuse und einer Dosierkante an der Eintrittsseite einer Ringnut (24) im Steuerzylinder begrenzt ist, die mit dem Kanal (20) im Steuerzylinder in Verbindung steht, dadurch gekennzeichnet, daß Flüssigkeit von der Bremse in eine Ringnut (22) abgelassen wird, die nicht mit dem Kanal (20) im Steuerzylinder (17) in Verbindung steht.

2. Hydraulisches Antiblockier-Bremssystem für ein Fahrzeug gemäß Anspruch 1, dadurch gekennzeichnet, daß es sich bei der nicht mit dem Kanal (20) im Steuerzylinder (17) in Verbindung stehenden im Steuerzylinder ausgeformten Ringnut (22) um diejenige Ringnut (22) handelt, die der unveränderlichen Öffnung (21) am nächsten liegt.

3. Hydraulisches Antiblockier-Bremssystem gemäß einem der vorstehenden Ansprüche, dadurch gekennzeichnet, daß es jenseits der unveränderlichen Öffnung (21) am Ende des Steuerzylinders (17) keine Strömungskanäle gibt.

4. Hydraulisches Antiblockier-Bremssystem gemäß einem der vorstehenden Ansprüche, dadurch gekennzeichnet, daß mindestens zwei der Ringnuten (23, 24), die von der Steuerfederkammer am weitesten entfernt sind, radiale Kanäle (25, 26) aufweisen, die mit dem Kanal (20) in Verbindung stehen, und eine in der Bohrung aufgenommene Buchse (11) Nuten (27, 28, 29) und Querkanäle (30, 31, 32, 33) aufweist, um die Verbindung mit den äußeren, Ringnuten (22, 23, 24) des Steuerzylinders herzustellen.

5. Hydraulisches Antiblockier-Bremssystem gemäß Anspruch 4, dadurch gekennzeichnet, daß von den beiden Querkanälen (33), die von der Steuerfederkammer am weitesten entfernt sind, ein erster mit einem Einlaß (16) von einem Hauptbremszylinder (1) und ein zweiter mit der Ausdehnungskammer (38) über eine Pumpe (39) in Verbindung steht, die zum Absaugen von Flüssigkeit aus der Ausdehnungskammer und zum Rückführen derselben über einen zweiten Querkanal ausgeführt ist.

6. Hydraulisches Antiblockier-Bremssystem gemäß einem der vorstehenden Ansprüche, dadurch gekennzeichnet, daß das Durchflußventil mit einer Dämpfungskammer (46) und einer Öffnung versehen ist, um die Reaktion am Fahrerpedal zu verringern.

7. Hydraulisches Antiblockier-Bremssystem gemäß einem der Ansprüche 1 bis 5, dadurch gekennzeichnet, daß die unveränderliche Öffnung durch einen ringförmigen Kanal zwischen einem Ventilelement (36) der Elektromagnetventils (35) und einer Öffnung mit verringertem Durchmesser am Ende des Steuerzylinders neben der Steuerfederkammer (19) begrenzt wird.

8. Hydraulisches Antiblockier-Bremssystem gemäß Anspruch 5, dadurch gekennzeichnet, daß der erste Querkanal bezüglich des zweiten Querkanals in axialer Richtung von der Steuerfederkammer (19) weg versetzt angeordnet ist.

9. Hydraulisches Antiblockier-Bremssystem gemäß Anspruch 5, dadurch gekennzeichnet, daß der Hauptbremszylindereinlaß (16) über ein in die Bohrung eingepreßtes Stahlrohr (45) gespeist wird.

10. Hydraulisches Antiblockier-Bremssystem gemäß Anspruch 7, dadurch gekennzeichnet, daß das Ventilelement (36) des Elektromagnetventils (35) durch den Kanal (20) in den Steuerzylinder (17) hineinragt.

11. Hydraulisches Antiblockier-Bremssystem gemäß Anspruch 10, dadurch gekennzeichnet, daß eine Führung (51) vorgesehen ist, um die Konzentrizität zwischen dem Ventilelement (36) und dem Kanal (20) aufrechtzuerhalten.

12. Hydraulisches Antiblockier-Bremssystem gemäß Anspruch 5, dadurch gekennzeichnet, daß der Steuerzylinder und die Buchse (17, 11) in ihrer Ruhestellung so ausgeführt und angeordnet sind, daß sie den Pumpenaustritt vom Hauptbremszylinder auf eine andere Weise als durch die unveränderliche Öffnung (21) zwischen dem Hauptbremszylinder und der Pumpe trennen.

## Revendications

1. Système hydraulique de freinage anti-bloquant pour véhicule, dans lequel la pression appliquée à une roue freinée (3) est commandée en réponse à des signaux provenant d'une unité de commande électrique (6), répondant à son tour à des signaux provenant d'un détecteur de vitesse (5) associé à la roue, et dans lequel une vanne de régulation agit avec une vanne unique actionnée par électro-aimant (35), la vanne de régulation comportant un tiroir (17) muni de plusieurs gorges annulaires extérieures agissant dans un alésage agencé dans un boîtier, l'écoulement vers le frein étant dirigé à travers un passage (20) passant pratiquement par l'axe du tiroir, un orifice fixe situé au niveau d'une extrémité du tiroir ou adjacent à une extrémité du tiroir, une partie de l'alésage située au niveau de cette extrémité du tiroir définissant une chambre (19) pour un ressort de commande (18), et un orifice variable est définie entre un orifice (33) existant dans le boîtier et une limite de dosage située sur le côté d'entrée d'une gorge annulaire (24) agencée dans le tiroir et qui communique avec le passage (20) existant dans le tiroir, caractérisé en ce que du fluide est extrait du frein via une gorge annulaire (22) existant dans le tiroir, qui ne communique pas avec le passage (20) existant dans le tiroir (17).

2. Système hydraulique de freinage anti-bloquant pour véhicule selon la revendication 1, caractérisé en ce que c'est la gorge annulaire (22) existant dans le tiroir qui est la plus proche de l'orifice fixe qui ne communique pas avec le passage (20) existant dans le tiroir (17).

3. Système anti-bloquant selon l'une quelconque des revendications précédentes, caractérisé en ce qu'il n'existe pas de passages d'écoulement au-delà de l'orifice fixe (21) existant au niveau de l'extrémité du tiroir (17).

4. Système anti-bloquant selon l'une quelconque des revendications précédentes, caractérisé en ce qu'au moins les deux gorges annulaires (23, 24) les plus éloignées de la chambre de ressort de commande ont des passages radiaux (25, 26) communiquant avec le passage (20), et un manchon reçu dans l'alésage comporte des gorges (27, 28, 29) et des passages transversaux (30, 31, 32, 33) adaptés pour communiquer avec les gorges annulaires extérieures (22, 23, 24) du tiroir.

5. Système anti-bloquant selon la revendication 4, caractérisé en ce que parmi les deux passages transversaux (33) les plus éloignés de la chambre de ressort de commande, un premier communique avec une entrée (16) provenant d'un maître-cylindre (1) et le second communique avec la chambre d'expansion (38) via une pompe (39) qui est adaptée pour extraire du fluide depuis la chambre d'expansion et le renvoyer via le second passage transversal.

6. Système anti-bloquant selon l'une quelconque des revendications précédentes, caractérisé en ce que la vanne de régulation est munie d'une chambre d'atténuation (46) et d'un orifice pour réduire la réaction de la pédale vers le conducteur.

7. Système anti-bloquant selon l'une quelconque des revendications 1 à 5, caractérisé en ce que l'orifice fixe est défini par un passage annulaire existant entre un élément de vanne (36) de la vanne actionnée par électro-aimant (35) et une ouverture de diamètre réduit située au niveau de l'extrémité du tiroir adjacente à la chambre de ressort de commande (19).

8. Système anti-bloquant selon la revendication 5, caractérisé en ce que le premier passage transversal est déplacé axialement loin de la chambre de ressort de commande (19) par rapport au second passage transversal.

9. Système anti-bloquant selon la revendication 5, caractérisé en ce que l'entrée (16) de maître-cylindre est acheminée via un tube d'acier (45) agencé à la presse dans l'alésage.

10. Système anti-bloquant selon la revendication 7, caractérisé en ce que l'élément de vanne (36) de la vanne actionnée par électro-aimant (35) fait saillie à travers le passage (20) jusqu'à l'intérieur du tiroir (17).

11. Système anti-bloquant selon la revendication 10, caractérisé en ce qu'un guide (51) est présent pour maintenir la concentricité entre l'élément de vanne (36) et le passage (20).

12. Système anti-bloquant selon la revendication 5, caractérisé en ce que le tiroir et le manchon (17, 11) dans leurs positions de repos sont construits et agencés pour isoler la sortie de pompe du maître-cylindre sauf à travers l'orifice fixe (21) situé entre le maître-cylindre et la pompe.
